(19) Europäisches Patentamt / European Patent Office / Office européen des brevets

(11) **EP 3 313 932 B1**

(12) **EUROPEAN PATENT SPECIFICATION**

(45) Date of publication and mention
of the grant of the patent:
**17.11.2021 Bulletin 2021/46**

(21) Application number: **16727197.2**

(22) Date of filing: **06.06.2016**

(51) Int Cl.:
*C08L 23/08* (2006.01)    *C08F 2/00* (2006.01)
*B32B 27/32* (2006.01)    *B32B 27/08* (2006.01)
*F16L 9/12* (2006.01)

(86) International application number:
**PCT/EP2016/062748**

(87) International publication number:
**WO 2016/206959 (29.12.2016 Gazette 2016/52)**

(54) **POLYETHYLENE COMPOSITION HAVING HIGH MECHANICAL PROPERTIES AND PROCESSABILITY**

POLYETHYLENZUSAMMENSETZUNG MIT HOHEN MECHANISCHEN EIGENSCHAFTEN UND GUTER VERARBEITBARKEIT

COMPOSITION DE POLYÉTHYLÈNE AYANT DES PROPRIÉTÉS MÉCANIQUES ET UNE APTITUDE AU TRAITEMENT ÉLEVÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2015 US 201562185281 P**

(43) Date of publication of application:
**02.05.2018 Bulletin 2018/18**

(73) Proprietor: **Basell Polyolefine GmbH**
**50389 Wesseling (DE)**

(72) Inventors:
 • **VITTORIAS, Iakovos**
  **55129 Mainz (DE)**
 • **MARCZINKE, Bernd Lothar**
  **65929 Frankfurt (DE)**
 • **MEIER, Gerhardus**
  **Houston, TX 77009 (US)**

 • **SCHUELLER, Ulf**
  **64331 Weiterstadt (DE)**
 • **MAUS, Andreas**
  **60431 Frankfurt (DE)**
 • **DÖTSCH, Diana**
  **55545 Bad Kreuznach (DE)**
 • **WIESECKE, Jens**
  **64673 Zwingenberg (DE)**
 • **MAVRIDIS, Harilaos**
  **Lebanon, Ohio 45036 (US)**

(74) Representative: **LyondellBasell**
**c/o Basell Poliolefine Italia**
**Intellectual Property**
**P.le Donegani 12**
**44122 Ferrara (IT)**

(56) References cited:
 **EP-A1- 2 738 212     EP-A1- 2 860 204**
 **WO-A1-2014/064062**

EP 3 313 932 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present disclosure provides a polyethylene composition having density from 0.945 to 0.950 $g/cm^3$ and high mechanical properties. In particular, due to its balance of environmental stress cracking resistance (FNCT) and impact resistance (Charpy), the present composition is particularly suitable for making extruded articles such as pipes, even with large diameter.

The present disclosure also relates to a multi-stage polymerization process for preparing the said polyethylene composition.

BACKGROUND OF THE INVENTION

It is known that polyethylene materials can be used for producing pipes, particularly by extrusion.

In fact polyethylene materials with medium to high density can be so designed, by properly selecting their molecular structure and molecular weight distribution, as to obtain a suitable balance of FNCT, impact resistance and processability in the extrusion processes, as disclosed in EP2256160, wherein the highest mechanical properties are reported in combination with density values higher than 0.950 $g/cm^3$.

However there is a continuous need for improvement of the mechanical properties of pipe materials, in order to meet the challenging and ever increasing industrial standards.

Other important requirements, on the process side, are energy saving, size stability (requiring a sufficiently long time to sagging) and wall thickness control even at high output rates.

It has now been found that by properly selecting the rheological, thermal and molecular features of the polyethylene composition, an improved balance of the said properties is achieved.

In particular, it has been found that the shear viscosity in the molten state and the crystallization time, in combination with the molecular structure of the polymer, play an important role in determining said properties.

SUMMARY OF THE INVENTION

The present disclosure provides a polyethylene composition having the following features:

1) density from 0.945 to 0.950 $g/cm^3$, in particular from 0.947 to 0.950 $g/cm^3$, determined according to ISO 1183 at 23°C;
2) ratio MIF/MIP from 25 to 43, in particular from 29 to 40, where MIF is the melt flow index at 190°C with a load of 21.60 kg, and MIP is the melt flow index at 190°C with a load of 5 kg, both determined according to ISO 1133;
3) MIF from 3.5 to less than 8.5 g/10 min., in particular from 3.5 to 7.5 g/10 min., or from 4 to 7 g/10 min.;
4) HMWcopo index from 1 to 40, in particular from 13 to 22.5;
5) long-chain branching index, LCBI, equal to or greater than 0.83, in particular from 0.83 to 0.95;

wherein the HMWcopo index is determined according to the following formula:

$$HMWcopo = (\eta_{0.02} \times t_{maxDSC})/(10^{\wedge}5)$$

where $\eta_{0.02}$ is the complex viscosity of the melt in Pa.s, measured at a temperature of 190°C, in a parallel-plate (or so-called plate-plate) rheometer under dynamic oscillatory shear mode with an applied angular frequency of 0.02 rad/s; the $t_{maxDSC}$ is the time, in minutes, required to reach the maximum value of heat flow (in mW) of crystallization (time at which the maximum crystallization rate is achieved, equivalent to the t1/2 crystallization half-time) at a temperature of 124 °C under quiescent conditions, measured in isothermal mode in a differential scanning calorimetry apparatus, DSC; LCBI is the ratio of the measured mean-square radius of gyration $R_g$, measured by GPC-MALLS, to the mean-square radius of gyration for a linear PE having the same molecular weight at a mol. weight of 1,000,000 g/mol, said composition comprising:

A) 30 — 70% by weight of an ethylene homopolymer or copolymer (the homopolymer being preferred) with density equal to or greater than 0.960 $g/cm^3$ and melt flow index MIE at 190°C with a load of 2.16 kg, according to ISO 1133, of 50 to 85 g/10 min.;

B) 30 — 70% by weight of an ethylene copolymer having a MIE value lower than the MIE value of A).

From the above defined features 2) and 3) it follows that the MIP values for the present polyethylene compositions range from about 0.08 to about 0.3 g/10 min. (approximated values).

BRIEF DESCRIPTION OF THE DRAWINGS

These and other features, aspects, and advantages of the present disclosure will become better understood with reference to the following description and appended claims, and accompanying drawing figure where:
The drawing is an illustrative embodiment of a simplified process-flow diagram of two serially connected gas-phase reactors suitable for use in accordance with various embodiments of ethylene polymerization processes disclosed herein to produce various embodiments of the polyethylene compositions disclosed herein.

It should be understood that the various embodiments are not limited to the arrangements and instrumentality shown in the drawing figure.

DETAILED DESCRIPTION OF THE INVENTION

The expression "polyethylene composition" is intended to embrace a composition of two or more ethylene polymer components, preferably with different molecular weights, such composition being also called "bimodal" or "multimodal" polymer in the relevant art.

The present polyethylene composition comprises one or more ethylene copolymers.

All the features herein defined, comprising the previously defined features 1) to 5), are referred to the said ethylene polymer or ethylene polymer composition. The addition of other components, like the additives normally employed in the art, can modify one or more of said features.

In a specific embodiment, the said HMWcopo index values of from 13 to 22.5 are associated with a density equal to or lower than 0.950 cm$^3$/g.

The ratio MIF/MIP provides a rheological measure of molecular weight distribution.

Another measure of the molecular weight distribution is provided by the ratio $M_{w\_MALLS}/M_{n\_GPC}$, where $M_{w\_MALLS}$ is the weight average molar mass measured with MALLS coupled to GPC and $M_{n\_GPC}$ is the number average molar mass, measured by GPC (Gel Permeation Chromatography), as explained in the examples.

Preferred $M_{w\_MALLS}/M_{n\_GPC}$ values for the present polyethylene composition range from 12 to 24.

The $M_{w\_MALLS}$ values are preferably equal to or higher than 350,000 g/mol, in particular from 350,000 to 500,000 g/mol.

Moreover the present polyethylene composition has preferably at least one of the following additional features.

- MIP: 0.1 — 0.3 g/10 min.;
- z-average molecular weight Mz equal to or greater than 1,500,000 g/mol, in particular from 1,600,000 to 3,000,000 g/mol, measured by GPC-MALLS (Gel Permeation Chromatography coupled with Multi-angle laser-light scattering);
- comonomer content equal to or less than 2.6% by weight, in particular from 1 to 2.4% (as determined by IR) by weight, with respect to the total weight of the composition.

The comonomer or comonomers present in the ethylene copolymers are generally selected from olefins having formula $CH_2$=CHR wherein R is an alkyl radical, linear or branched, having from 1 to 10 carbon atoms.

Specific examples are propylene, butene-1, pentene-1, 4-methylpentene-1, hexene-1, octene-1 and decene-1. A particularly preferred comonomer is hexene-1.

The present composition comprises:

A) 30 — 70% by weight, preferably 40 — 60% by weight of an ethylene homopolymer or copolymer (the homopolymer being preferred) with density equal to or greater than 0.960 g/cm$^3$ and melt flow index MIE at 190°C with a load of 2.16 kg, according to ISO 1133, of 50 to 85 g/10 min.;
B) 30 — 70% by weight, preferably 40 — 60% by weight of an ethylene copolymer having a MIE value lower than the MIE value of A), preferably lower than 0.5 g/10 min.

The above percent amounts are given with respect to the total weight of A) + B).

A specific MIE ranges for component A) is of 60 to 85 g/10 min.

As previously said, the present polyethylene composition can be advantageously used in producing pipes, particularly by extrusion, thanks to its valuable mechanical properties. The pipes can be monolayer of multilayer, wherein at least one layer comprises the present polyethylene composition.

In fact the present polyethylene composition is preferably characterized by the following properties:

- FNCT equal to or greater than 680 hours at 5 MPa, 90°C;
- Charpy (0°C) equal to or greater than 15 kJ/m$^2$, in particular equal to or greater than 18 kJ/m$^2$.

The details of the test methods are given in the examples.

Moreover, the present polyethylene composition can be melt-processed even at high output rates, still without undergoing sagging and wall thickness instability.

The pipes are produced generally by extrusion according to well known techniques. The production process involves extrusion of a molten thermoplastic resin through an extrusion apparatus equipped with a cooling section and a pulling and cutting device.

While no necessary limitation is known to exist in principle on the kind of polymerization processes and catalysts to be used, it has been found that the present polyethylene composition can be prepared by a gas phase polymerization process in the presence of a Ziegler-Natta catalyst.

A Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound supported on $MgCl_2$.

Preferred organometallic compounds are the organo-Al compounds.

Thus in a preferred embodiment, the present polyethylene composition is obtainable by using a Ziegler-Natta polymerization catalyst, more preferably a Ziegler-Natta catalyst supported on $MgCl_2$, even more preferably a Ziegler-Natta catalyst comprising the product of reaction of:

a) a solid catalyst component comprising a Ti compound and an electron donor compound ED supported on $MgCl_2$;
b) an organo-Al compound; and optionally
c) an external electron donor compound $ED_{ext}$.

Preferably in component a) the ED/Ti molar ratio ranges from 1.5 to 3.5 and the Mg/Ti molar ratio is higher than 5.5, in particular from 6 to 80.

Among suitable titanium compounds are the tetrahalides or the compounds of formula $TiX_n(OR^1)_{4-n}$, where $0 \leq n \leq 3$, X is halogen, preferably chlorine, and $R^1$ is $C_1$-$C_{10}$ hydrocarbon group. The titanium tetrachloride is the preferred compound.

The ED compound is generally selected from alcohol, ketones, amines, amides, nitriles, alkoxysilanes, aliphatic ethers, and esters of aliphatic carboxylic acids.

Preferably the ED compound is selected among amides, esters and alkoxysilanes.

Excellent results have been obtained with the use of esters which are thus particularly preferred as ED compound. Specific examples of esters are the alkyl esters of C1-C20 aliphatic carboxylic acids and in particular C1-C8 alkyl esters of aliphatic mono carboxylic acids such as ethylacetate, methyl formiate, ethylformiate, methylacetate, propylacetate, i-propylacetate, n-butylacetate, i-butylacetate. Moreover, are also preferred the aliphatic ethers and particularly the C2-C20 aliphatic ethers, such as tetrahydrofurane (THF) or dioxane.

In the said solid catalyst component the $MgCl_2$ is the basic support, even if minor amount of additional carriers can be used. The $MgCl_2$ can be used as such or obtained from Mg compounds used as precursors that can be transformed into $MgCl_2$ by the reaction with halogenating compounds. Particularly preferred is the use of $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the ASTM-card reference of the spectrum of the non-active halide is diminished in intensity and broadened. In the X-ray spectra of preferred magnesium dihalides in active form said most intense line is diminished in intensity and replaced by a halo whose maximum intensity is displaced towards lower angles relative to that of the most intense line.

Particularly suitable for the preparation of the present polyethylene composition are the catalysts wherein the solid catalyst component a) is obtained by first contacting the titanium compound with the $MgCl_2$, or a precursor Mg compound, optionally in the presence of an inert medium, thus preparing an intermediate product a') containing a titanium compound supported on $MgCl_2$, which intermediate product a') is then contacted with the ED compound which is added to the reaction mixture alone or in a mixture with other compounds in which it represents the main component, optionally in the presence of an inert medium.

With the term "main component" we intend that the said ED compound must be the main component in terms of molar amount, with respect to the other possible compounds excluded inert solvents or diluents used to handle the contact mixture. The ED treated product can then be subject to washings with the proper solvents in order to recover the final product. If needed, the treatment with the ED compound desired can be repeated one or more times.

As previously mentioned, a precursor of $MgCl_2$ can be used as starting essential Mg compound. This can be selected for example among Mg compound of formula $MgR'_2$ where the R' groups can be independently C1-C20 hydrocarbon groups optionally substituted, OR groups, OCOR groups, chlorine, in which R is a C1-C20 hydrocarbon groups optionally substituted, with the obvious proviso that the R' groups are not simultaneously chlorine. Also suitable as precursors are the Lewis adducts between $MgCl_2$ and suitable Lewis bases. A particular and preferred class being constituted by the $MgCl_2$ $(R"OH)_m$ adducts in which R" groups are C1-C20 hydrocarbon groups, preferably C1-C10 alkyl groups, and m is from 0.1 to 6, preferably from 0.5 to 3 and more preferably from 0.5 to 2. Adducts of this type can generally be obtained by mixing alcohol and $MgCl_2$ in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034.

Particularly interesting are the $MgCl_2 \bullet (EtOH)_m$ adducts in which m is from 0.15 to 1.7 obtained subjecting the adducts with a higher alcohol content to a thermal dealcoholation process carried out in nitrogen flow at temperatures comprised between 50 and 150°C until the alcohol content is reduced to the above value. A process of this type is described in EP 395083.

The dealcoholation can also be carried out chemically by contacting the adduct with compounds capable to react with the alcohol groups.

Generally these dealcoholated adducts are also characterized by a porosity (measured by mercury method ) due to pores with radius up to 0.1 $\mu$m ranging from 0.15 to 2.5 $cm^3/g$ preferably from 0.25 to 1.5 $cm^3/g$.

These adducts are reacted with the $TiX_n(OR^1)_{4-n}$ compound (or possibly mixtures thereof) mentioned above which is preferably titanium tetrachloride. The reaction with the Ti compound can be carried out by suspending the adduct in $TiCl_4$ (generally cold). The mixture is heated up to temperatures ranging from 80-130°C and kept at this temperature for 0.5-2 hours. The treatment with the titanium compound can be carried out one or more times. Preferably it is repeated twice. It can also be carried out in the presence of an electron donor compound as those mentioned above. At the end of the process the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated hydrocarbons.

As mentioned above, the intermediate product is then brought into contact with the ED compound under conditions able to fix on the solid an effective amount of donor. Due to the high versatility of this method, the amount of donor used can widely vary. As an example, it can be used in molar ratio with respect to the Ti content in the intermediate product ranging from 0.5 to 20 and preferably from 1 to 10. Although not strictly required the contact is typically carried out in a liquid medium such as a liquid hydrocarbon. The temperature at which the contact takes place can vary depending on the nature of the reagents. Generally it is comprised in the range from -10° to 150°C and preferably from 0° to 120°C. It is plane that temperatures causing the decomposition or degradation of any specific reagents should be avoided even if they fall within the generally suitable range. Also the time of the treatment can vary in dependence of other conditions such as nature of the reagents, temperature, concentration etc. As a general indication this contact step can last from 10 minutes to 10 hours more frequently from 0.5 to 5 hours. If desired, in order to further increase the final donor content, this step can be repeated one or more times. At the end of this step the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated or oxygenated hydrocarbons.

As previously mentioned, the said solid catalyst component is converted into catalysts for the polymerization of olefins by reacting it, according to known methods, with an organometallic compound of group 1, 2 or 13 of the Periodic Table of elements, in particular with an Al-alkyl compound.

The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as $AlEt_2Cl$ and $Al_2Et_3Cl_3$ optionally in mixture with said trialkyl aluminum compounds.

The external electron donor compound $ED_{ext}$ optionally used to prepare the said Ziegler-Natta catalysts can be equal to or different from the ED used in the solid catalyst component a). Preferably it is selected from the group consisting of ethers, esters, amines, ketones, nitriles, silanes and their mixtures. In particular it can advantageously be selected from the C2-C20 aliphatic ethers and in particulars cyclic ethers preferably having 3-5 carbon atoms such as tetrahydrofurane and dioxane.

The catalyst can be prepolymerized according to known techniques, by producing reduced amounts of polyolefin, preferably polypropylene or polyethylene. The prepolymerization can be carried out before adding the electron donor compound ED, thus by subjecting to prepolymerization the intermediate product a'). Alternatively it is possible to subject to prepolymerization the solid catalyst component a).

The amount of prepolymer produced can be up to 500 g per g of intermediate product a') or of component a). Preferably it is from 0.5 to 20 g per g of intermediate product a').

The prepolymerization is carried out with the use of a suitable cocatalyst such as organoaluminum compounds that can also be used in combination with an external electron donor compound as discussed above.

It can be carried out at temperatures from 0 to 80°C, preferably from 5 to 70°C, in the liquid or gas phase.

The catalysts wherein the intermediate product a') is subjected to prepolymerization as described above are particularly preferred.

It has been found that by using the above described polymerization catalyst, the present polyethylene composition can be prepared in a process comprising the following steps, in any mutual order:

a) polymerizing ethylene, optionally together with one or more comonomers, in a gas-phase reactor in the presence of hydrogen;
b) copolymerizing ethylene with one or more comonomers in another gas-phase reactor in the presence of an amount of hydrogen less than step a);

where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones.

In the first polymerization zone (riser), fast fluidization conditions are established by feeding a gas mixture comprising one or more olefins (ethylene and comonomers) at a velocity higher than the transport velocity of the polymer particles. The velocity of said gas mixture is preferably comprised between 0.5 and 15 m/s, more preferably between 0.8 and 5 m/s. The terms "transport velocity" and "fast fluidization conditions" are well known in the art; for a definition thereof, see, for example, "D. Geldart, Gas Fluidisation Technology, page 155 et seq. , J. Wiley & Sons Ltd. , 1986".

In the second polymerization zone (downcomer), the polymer particles flow under the action of gravity in a densified form, so that high values of density of the solid are reached (mass of polymer per volume of reactor), which approach the bulk density of the polymer.

In other words, the polymer flows vertically down through the downcomer in a plug flow (packed flow mode), so that only small quantities of gas are entrained between the polymer particles.

Such process allows to obtain from step a) an ethylene polymer with a molecular weight lower than the ethylene copolymer obtained from step b).

Preferably, a copolymerization of ethylene to produce a relatively low molecular weight ethylene copolymer (step a) is performed upstream the copolymerization of ethylene to produce a relatively high molecular weight ethylene copolymer (step b). To this aim, in step a) a gaseous mixture comprising ethylene, hydrogen, comonomer and an inert gas is fed to a first gas-phase reactor, preferably a gas-phase fluidized bed reactor. The polymerization is carried out in the presence of the previously described Ziegler-Natta catalyst.

Hydrogen is fed in an amount depending on the specific catalyst used and, in any case, suitable to obtain in step a) an ethylene polymer with a melt flow index MIE of 50 to 85 g/10 min. In order to obtain the above MIE range, in step a) the hydrogen/ethylene molar ratio is indicatively from 1 to 5, the amount of ethylene monomer being from 2 to 20% by volume, preferably from 8 to 15% by volume, based on the total volume of gas present in the polymerization reactor. The remaining portion of the feeding mixture is represented by inert gases and one or more comonomers, if any. Inert gases which are necessary to dissipate the heat generated by the polymerization reaction are conveniently selected from nitrogen or saturated hydrocarbons, the most preferred being propane.

The operating temperature in the reactor of step a) is selected between 50 and 120°C, preferably between 65 and 100°C, while the operating pressure is between 0.5 and 10 MPa, preferably between 2.0 and 3.5 MPa.

In a preferred embodiment, the ethylene polymer obtained in step a) represents from 30 to 70% by weight of the total ethylene polymer produced in the overall process, i. e. in the first and second serially connected reactors.

The ethylene polymer coming from step a) and the entrained gas are then passed through a solid/gas separation step, in order to prevent the gaseous mixture coming from the first polymerization reactor from entering the reactor of step b) (second gas-phase polymerization reactor). Said gaseous mixture can be recycled back to the first polymerization reactor, while the separated ethylene polymer is fed to the reactor of step b). A suitable point of feeding of the polymer into the second reactor is on the connecting part between the downcomer and the riser, wherein the solid concentration is particularly low, so that the flow conditions are not negatively affected.

The operating temperature in step b) is in the range of 65 to 95°C, and the pressure is in the range of 1.5 to 4.0 MPa. The second gas-phase reactor is aimed to produce a relatively high molecular weight ethylene copolymer by copolymerizing ethylene with one or more comonomers. Furthermore, in order to broaden the molecular weight distribution of the final ethylene polymer, the reactor of step b) can be conveniently operated by establishing different conditions of monomers and hydrogen concentration within the riser and the downcomer.

To this purpose, in step b) the gas mixture entraining the polymer particles and coming from the riser can be partially or totally prevented from entering the downcomer, so to obtain two different gas composition zones. This can be achieved by feeding a gas and/or a liquid mixture into the downcomer through a line placed at a suitable point of the downcomer, preferably in the upper part thereof. Said gas and/or liquid mixture should have a suitable composition, different from that of the gas mixture present in the riser. The flow of said gas and/or liquid mixture can be regulated so that an upward flow of gas counter-current to the flow of the polymer particles is generated, particularly at the top thereof, acting as a barrier to the gas mixture entrained among the polymer particles coming from the riser. In particular, it is advantageous to feed a mixture with low content of hydrogen in order to produce the higher molecular weight polymer fraction in the downcomer. One or more comonomers can be fed to the downcomer of step b), optionally together with ethylene, propane or other inert gases.

The hydrogen/ethylene molar ratio in the downcomer of step b) is comprised between 0.005 and 0.2, the ethylene concentration being comprised from 0.5 to 15%, preferably 0.5 - 10%, by volume, the comonomer concentration being comprised from 0.2 to 1.5 % by volume, based on the total volume of gas present in said downcomer. The rest is propane or similar inert gases. Since a very low molar concentration of hydrogen is present in the downcomer, by carrying out the present process it is possible to bond a relatively high amount of comonomer to the high molecular weight polyethylene fraction.

The polymer particles coming from the downcomer are reintroduced in the riser of step b).

Since the polymer particles keep reacting and no more comonomer is fed to the riser, the concentration of said comonomer drops to a range of 0.1 to 1.2 % by volume, based on the total volume of gas present in said riser. In practice, the comonomer content is controlled in order to obtain the desired density of the final polyethylene. In the riser of step b) the hydrogen/ethylene molar ratio is in the range of 0.01 to 0.5, the ethylene concentration being comprised between 5 and 15 % by volume based on the total volume of gas present in said riser. The rest is propane or other inert gases.

More details on the above described polymerization process are provided in WO2005019280.

EXAMPLES

The practice and advantages of the various embodiments, compositions and methods as provided herein are disclosed below in the following examples. These Examples are illustrative only, and are not intended to limit the scope of the appended claims in any manner whatsoever.

The following analytical methods are used to characterize the polymer compositions.

**Density**

Determined according to ISO 1183 at 23°C.

**HMWcopo Index**

In order to quantify the crystallization and processability potential of the polymer, the HMWcopo (High Molecular Weight Copolymer) Index is used, which is defined by the following formula:

$$\text{HMWcopo} = (\eta_{0.02} \times t_{maxDSC})/(10^{\wedge}5)$$

It is decreasing with increasing potential of easy processing (low melt-viscosity) and fast crystallization of the polymer. It is also a description and quantification of the amount of high molecular weight fraction, correlating to the melt complex viscosity $\eta_{0.02}$ at the frequency of 0.02 rad/s, and the amount of incorporated comonomer which delays the crystallization, as quantified by the maximum heat flow time for quiescent crystallization, $t_{maxDSC}$. The melt viscosity $\eta_{0.02}$ is determined by a measurement in dynamic oscillatory shear in a parallel plate rotational rheometer (in this case an AntonPaar MCR300), with 25mm diameter plates, at T = 190 °C. Samples are prepared in a melt-press at 200 °C, under 200 bar pressure for 4min, in a plate of thickness of approximately 1mm and stamped out to 25mm diameter discs, which are inserted in the rheometer. The measurement is done in dynamic oscillatory shear mode as a so-called "frequency-sweep", measuring at frequencies from 620 to 0.02 rad/s, under constant strain-amplitude of 5% (in the linear rheological regime). The $t_{maxDSC}$ is determined using a Differential Scanning Calorimetry apparatus, TA Instruments Q2000, under isothermal conditions at a constant temperature of 124 °C. 5-6 mg of sample are weighted and brought into the aluminium DSC pans. The sample is heated with 20K/min up to 200 °C and cooled down also with 20K/min to the test temperature, in order to erase the thermal history. The isothermal test begins immediately after and the time is recorded until crystallization occurs. The time interval until the crystallization heat flow maximum (peak), $t_{maxDSC}$, is determined using the vendor software (TA Instruments). The measurement is repeated 3x times and an average value is then calculated (in min). If no crystallization is observed under these conditions for more than 120 minutes, the value of $t_{maxDSC}$ = 120 minutes is used for further calculations of the HMWcopo index.

The melt viscosity $\eta_{0.02}$ value is multiplied by the $t_{maxDSC}$ value and the product is normalized by a factor of 100000 (10^5).

## Molecular Weight Distribution Determination

The determination of the molar mass distributions and the mean number average mol. weight Mn was carried out by high-temperature gel permeation chromatography using a method described in ISO 16014-1, -2, -4, issues of 2003. The weight-average mol. weight $M_w$ and the z-average $M_z$, as well as the $M_w/M_n$ derived where determined by the MALLS coupled to the GPC, as described below. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used. The solvent was vacuum destilled under Nitrogen and was stabilized with 0.025% by weight of 2,6-di-tert-butyl-4-methylphenol. The flowrate used was 1 ml/min, the injection was 500$\mu$l and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane. The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

## Melt flow index

Determined according to ISO 1133 at 190°C with the specified load.

## Long Chain Branching index (LCBI)

The LCB index corresponds to the branching factor g', measured for a molecular weight of $10^6$ g/mol. The branching factor g', which allows determining long-chain branches at high Mw, was measured by Gel Permeation Chromatography (GPC) coupled with Multi-Angle Laser-Light Scattering (MALLS). The radius of gyration for each fraction eluted from the GPC (as described above but with a flow-rate of 0.6 ml/min and a column packed with 30$\mu$m particles) is measured by analyzing the light scattering at the different angles with the MALLS (detector Wyatt Dawn EOS, Wyatt Technology, Santa Barbara, Calif.). A laser source of 120mW of wavelength 658nm was used. The specific index of refraction was taken as 0.104 ml/g. Data evaluation was done with Wyatt ASTRA 4.7.3 and CORONA 1.4 software. The LCB Index is determined as described in the following.

The parameter g' is the ratio of the measured mean square radius of gyration to that of a linear polymer having the same molecular weight. Linear molecules show g' of 1, while values less than 1 indicate the presence of LCB. Values of g' as a function of mol. weight, M, were calculated from the equation:

$$g'(M) = <Rg^2>_{sample,M}/<Rg^2>_{linear\ ref.,M}$$

where <Rg2>, M is the root-mean-square radius of gyration for the fraction of mol. weight M.

The radius of gyration for each fraction eluted from the GPC (as described above but with a flow-rate of 0.6 ml/min and a column packed with 30$\mu$m particles) is measured by analyzing the light scattering at the different angles. Therefore, from this MALLS setup it is possible to determine mol. weight M and $<Rg^2>_{sample,M}$ and to define a g' at a measured M = $10^6$ g/mol. The $<Rg^2>_{linear\ ref.,M}$ is calculated by the established relation between radius-of-gyration and molecular weight for a linear polymer in solution (Zimm and Stockmayer WH 1949)) and confirmed by measuring a linear PE reference with the same apparatus and methodology described.

The same protocol is described in the following documents. Zimm BH, Stockmayer WH (1949) The dimensions of chain molecules containing branches and rings. J Chem Phys 17 Rubinstein M., Colby RH. (2003), Polymer Physics, Oxford University Press

## Comonomer content

The comonomer content is determined by means of IR in accordance with ASTM D 6248 98, using an FT-IR spectrometer Tensor 27 from Bruker, calibrated with a chemometric model for determining ethyl- or butyl- side-chains in PE for butene or hexene as comonomer, respectively. The result is compared to the estimated comonomer content derived from the mass-balance of the polymerization process and was found to be in agreement.

## Environmental stress cracking resistance according to full notch creep test (FNCT)

The environmental stress cracking resistance of polymer samples is determined in accordance to international standard ISO 16770 (FNCT) in aqueous surfactant solution. From the polymer sample a compression moulded 10 mm thick sheet has been prepared. The bars with squared cross section ($10{\times}10{\times}100$ mm) are notched using a razor blade on four sides perpendicularly to the stress direction. A notching device described in M. Fleissner in Kunststoffe 77 (1987), pp. 45 is used for the sharp notch with a depth of 1.6 mm. The load applied is calculated from tensile force divided by the initial ligament area. Ligament area is the remaining area = total cross-section area of specimen minus the notch area. For FNCT specimen: $10{\times}10$ mm$^2$ - 4 times of trapezoid notch area = 46.24 mm$^2$ (the remaining cross-section for the failure process / crack propagation). The test specimen is loaded with standard condition suggested by the ISO 16770 with constant load of 5 MPa at 90°C in an aqueous solution of 2% by weight of ARKOPAL N100 and 5% of anionic surfactant GENAPOL Paste. Time until rupture of test specimen is detected.

## Charpy

Fracture toughness determination by an internal method on test bars measuring $10 \times 10 \times 80$ mm which had been sawn out of a compression molded sheet with a thickness of 10 mm. Six of these test bars are notched in the center using a razor blade in the notching device mentioned above for FNCT. The notch depth is 1.6 mm. The measurement is carried out substantially in accordance with the Charpy measurement method in accordance with ISO 179-1, with modified test specimens and modified impact geometry (distance between supports). All test specimens are conditioned to the measurement temperature of 0°C over a period of from 2 to 3 hours. A test specimen is then placed without delay onto the support of a pendulum impact tester in accordance with ISO 179-1. The distance between the supports is 60 mm. The drop of the 2 J hammer is triggered, with the drop angle being set to 160°, the pendulum length to 225 mm and the impact velocity to 2.93 m/s. The fracture toughness value is expressed in kJ/m$^2$ and is given by the quotient of the impact energy consumed and the initial cross-sectional area at the notch, aFM. Only values for complete fracture and hinge fracture can be used here as the basis for a common meaning (see suggestion by ISO 179-1).

## Time to Sagging

Time-to-Sagging is measured at a pipe-extrusion line with a Battenfeld-Cincinnati BEX 1-60-30B extruder, a screw diameter of 60mm, screw length of 30D, barrier screw with mixing part (E3034 60-30B 051-1). The head is with a lattice basket die of 132mm, pin of 106mm and die-gap of 13mm. The barrel is heated at 200 °C, the pipe head at 210 °C and the melt at 200°C. The output is set at 17kg/h after all processing parameters are constant. The extruder is run for 30min at these constant conditions, then the molten polymer tube is cut and, with an LCD stopwatch, the time is measured for the melt to sag down to a distance of 724mm.

## Energy Consumption (Extrusion)

In order to assess the processability of the materials for pipe-extrusion, the samples were extruder in a Battenfeld-Cincinnati BEX 1-60-30B extruder, a screw diameter of 60mm, screw length of 30D, barrier screw with mixing part (E3034 60-30B 051-1). The head is with a lattice basket die of 132mm, pin of 106mm and die-gap of 13mm. The barrel is heated at 200 °C, the pipe head at 210 °C and the melt at 200°C. The power and screw rpm of the extruded are adjusted to keep a constant output of 200kg/h with a drawdown velocity of 1.1 m/min. Once the inner and outer surface of the pipe are in good quality and the system is in steady-state, the energy consumption required for the extrusion of the tested grade under constant output of 200kg/h is calculated by: the recorded power consumption (kW), divided by the screw (rpm) and drawdown velocity (m/min).

**Thickness Tolerance**

The wall thickness of the pipes extruded as described above is measured after the extruded pipes are cooled using a precision micrometer at 4 positions radially distributed. The maximum and minimum reported values of wall-thickness of 10 pipe samples (cut at 1m length) are recorded and the difference of max. — min. thickness in mm is given as thickness tolerance and as a measure of the final product quality and process-ability.

**Example 1**

Process Setup

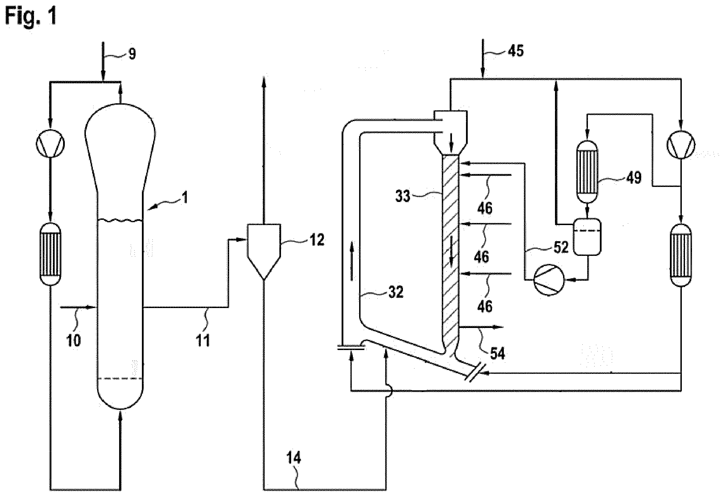

The polymerization process was carried out under continuous conditions in a plant comprising two serially connected gas-phase reactors, as shown in Figure 1.

The solid catalyst component is prepared as follows.

Procedure for the preparation of the spherical support (adduct of $MgCl_2$/EtOH)

A magnesium chloride and alcohol adduct was prepared following the method described in Example 2 of USP 4,399,054, but working at 2000 RPM instead of 10000 RPM. The adduct contained about 3 mols of alcohol and about 2.5%wt of $H_2O$ and had an average size of about 55 $\mu$m. The adduct was subject to a thermal treatment, under nitrogen stream, over a temperature range of 50-150 °C until a weight content of 25% of alcohol was reached.

Procedure for the preparation of the catalyst component

Into a 2 L reaction vessel, purged with nitrogen, 1 L of $TiCl_4$ was introduced at 0°C. Then, at the same temperature, 70 grams of a spherical $MgCl_2$/EtOH adduct containing 25%wt of ethanol, prepared as described above, were added under stirring.

The temperature was raised to 130°C in 2 hours and maintained for 60 min. Then, the stirring was discontinued, the solid product was allowed to settle (in 1h keeping still 130°C) and the supernatant liquid was siphoned off. A volume of fresh $TiCl_4$ was introduced into the reactor in order to have again 1L of total slurry and the temperature was raised to 110°C under stirring. This temperature was kept for 15' then the stirring was stopped and the solid was allowed to settle (in 1h at 110°C), and the supernatant liquid was siphoned off.

The solid residue was then washed two times with hexane at 50°C and three times at 25°C and dried under vacuum at 30°C and analyzed.

The spherically shaped solid has a magnesium content of 19.0%wt, and an average particle size (P50) of 57 micron.

Propylene- Pre-polymerization

Into a 1.5L glass reactor provided with stirrer, 0.8L of hexane at 20°C and whilst stirring 47g of the catalyst component prepared as described above were introduced at 10°C. Keeping constant the internal temperature, 14g of tri-n-octylaluminum (TnOA) in hexane (about 370 g/1) were slowly introduced into the reactor and the temperature was kept at 10°C. After 3' minutes stirring, an amount of cyclohexylmethyldimethoxysilane (C donor) was introduced so as to have a Al/(C donor) molar ratio of 6. After 10', 61g of propylene were carefully introduced into the reactor at the same temperature in 6 hours keeping a constant flow. The consumption of propylene in the reactor was monitored and the polymerization was discontinued when a theoretical conversion of 1.3g of polymer per g of catalyst was deemed to be reached. The prepolymer particles were allowed to settle. The product was washed four times with hexane at a temperature of 20°C (60g/L) and dried under vacuum at 30°C.

Internal electron donor supportation on the prepolymerized catalyst

About 42g of the solid prepolymerised catalyst prepared as described above were charged in a glass reactor purged with nitrogen and slurried with 0.8L of hexane at 50°C.

Then, EthylAcetate was carefully added dropwise (in 10') in such an amount to have a molar ratio of 1.7 between Mg of the prepolymerised catalyst and the organic Lewis base.

The slurry was kept under stirring for 2h still having 50°C as internal temperature.

After that the stirring was stopped and the solid was allowed to settle. One single hexane wash was performed at room temperature before recovering and drying the final catalyst.

Polymerization

13.4 g/h of the solid catalyst 1 prepared as described above were fed, using 5 kg/h of liquid propane, to a precontacting apparatus, in which also triethylaluminum (TEA) as well as tetrahydrofuran (THF) were dosed. The weight ratio between aluminum alkyl and solid catalyst component was 3:1. The weight ratio between aluminum alkyl and THF was 44 g/g. The precontacting step was carried out under stirring at 60°C with a total residence time of 120 minutes.

The catalyst enters the first gas-phase polymerization reactor 1 of Fig. 1 via line 10. In the first reactor ethylene was polymerized using $H_2$ as molecular weight regulator and in the presence of propane as inert diluent. 48 kg/h of ethylene and 290 g/h of hydrogen were fed to the first reactor via line 9. No comonomer was fed to the first reactor.

The polymerization was carried out at a temperature of 80°C and at a pressure of 2.9 MPa. The polymer obtained in the first reactor was discontinuously discharged via line 11, separated from the gas into the gas/solid separator 12, and reintroduced into the second gas-phase reactor via line 14.

The polymer produced in the first reactor had a melt index MIE of about 80 g/10 min and a density of 0.966 kg/dm$^3$.

The second reactor was operated under polymerization conditions of about 80°C, and a pressure of 2.5 MPa. The riser has an internal diameter of 200 mm and a length of 19 m. The downcomer has a total length of 18 m, an upper part of 5 m with an internal diameter of 300 mm and a lower part of 13 m with an internal diameter of 150 mm. In order to broaden the molecular weight distribution of the final ethylene polymer, the second reactor was operated by establishing different conditions of monomers and hydrogen concentration within the riser 32 and the downcomer 33. This is achieved by feeding via line 52, 170 kg/h of a liquid stream (liquid barrier) into the upper part of the downcomer 33. Said liquid stream has a composition different from that of the gas mixture present in the riser. Said different concentrations of monomers and hydrogen within the riser, the downcomer of the second reactor and the composition of the liquid barrier are indicated in Table 1. The liquid stream of line 52 comes from the condensation step in the condenser 49, at working conditions of 58°C and 2.5 MPa, wherein a part of the recycle stream is cooled and partially condensed. As shown in the figure, a separating vessel and a pump are placed, in the order, downstream the condenser 49. The monomers to the downcomer were fed in 3 positions (lines 46). In dosing point 1, located just below the barrier, 10 kg/h of ethylene and 1.55 kg/h of 1-hexene were introduced. In dosing point 2, located 2.3 meters below dosing point 1, 5 kg/h of ethylene were introduced. In dosing point 3, located 4 meters below dosing point 2, 5 kg/h of ethylene were introduced. In each of the 3 dosing points, a liquid taken from stream 52 was additionally fed in ratio to ethylene of 1:1. 5 kg/h of propane, 23.3 kg/h of ethylene and 1.3 g/h of hydrogen were fed through line 45 into the recycling system.

The final polymer was discontinuously discharged via line 54.

The polymerization process in the second reactor produced relatively high molecular weight polyethylene fractions. In Table 1 the properties of the final product are specified. It can be seen that the melt index of the final product is decreased as compared to the ethylene resin produced in the first reactor, showing the formation of high molecular weight fractions in the second reactor.

The first reactor produced around 51 % by weight (split wt %) of the total amount of the final polyethylene resin produced by both first and second reactors.

The comonomer (hexene-1) amount was of about 2.2 (determined by IR) % by weight.

## Example 2

The polymerization process was carried out with the same setup, the same polymerization catalyst and under the same conditions as in Example 1, except for the following:

- The precontacting step was carried out under stirring at 50°C with a total residence time of 60 minutes.
- Catalyst feed was 8.9 g/h.
- 46.3 kg/h of ethylene and 380 g/h of hydrogen were fed to the first reactor via line 9.
- 150 kg/h of liquid barrier were fed to the second reactor.
- Feeding of hexene to dosing point 1: 1.7 kg/h.
- 24.8 kg/h of ethylene and 2.8 g/h of hydrogen were fed through line 45.
- The split of the first reactor was around 48 % by weight.

## Example 3

The polymerization process was carried out with the same setup, the same polymerization catalyst and under the same conditions as in Example 1, except for the following:

- The precontacting step was carried out under stirring at 50°C with a total residence time of 60 minutes.
- Catalyst feed was 8 g/h.

- 48 kg/h of ethylene and 350 g/h of hydrogen were fed to the first reactor via line 9.
- 50 kg/h of liquid barrier were fed to the second reactor.
- Feeding of hexene to dosing point 1: 1.42 kg/h.
- 24.8 kg/h of ethylene and 2.0 g/h of hydrogen were fed through line 45.
- The split of the first reactor was around 49 % by weight.

**Comparative Example 1**

The polymer of this comparative example is a polyethylene composition available on the market with the commercial name HDPE XLS12B black (Total).

**Comparative Example 2**

The polymer of this comparative example is a polyethylene composition available on the market with the commercial name Eltex TUB 125 N2025 orange (Ineos).

Table 1

| | Ex. 1 | EX. 2 |
|---|---|---|
| Operative conditions first reactor | | |
| $H_2/C_2H_4$ Molar ratio | 2.6 | 2.5 |
| $C_2H_4\%$ | 11.4 | 11.7 |
| Split (wt%) | 51 | 48 |
| MIE A) | 76 | 77 |
| Operative conditions second reactor | | |
| $H_2/C_2H_4$ Molar ratio riser | 0.024 | 0.023 |
| $C_2H_4\%$ riser | 8.9 | 10.9 |
| $C_6H_{12}$ % riser | 0.65 | 0.84 |
| $H_2/C_2H_4$ Molar ratio downcomer | 0.028 | 0.02 |
| $C_2H_4\%$ downcomer | 3.6 | 6.5 |
| $C_6H_{12}$ % downcomer | 0.79 | 1 |
| $H_2/C_2H_4$ Molar ratio barrier | 0.006 | 0.005 |
| $C_2H_4\%$ barrier | 5.4 | 8.2 |
| $C_6H_{12}$ % barrier | 0.89 | 1 |
| Polymer properties | | |
| Density (A) [g/cm$^3$] | 0.969 | 0.969 |
| MIP final resin [g/10 min] | 0.17 | 0.16 |
| MIF final resin [g/10 min] | 6.2 | 5.4 |
| Density final resin [g/cm$^3$] | 0.949 | 0.948 |
| MIF/MIP final resin | 36.2 | 33.6 |
| HMWcopo Index | 15.8 | 18.2 |
| LCBI at 1,000,000 g/mol | 0.91 | 0.9 |
| $Mw_{MALLS}/Mn_{GPC}$ | 22.1 | 12.9 |
| $Mw_{MALLS}$ [g/mol] | 413203 | 444838 |
| $Mz_{MALLS}$ [g/mol] | 1973140 | 1825490 |
| FNCT 5 MPa/90°C (hours) | 974 | 1350 |
| Charpy T = 0°C [kJ/m²] | 20.1 | 17.8 |
| Sagging (sec) | 10:17 | 10:06 |
| Pipe process parameter [kW/(rpm·m·min)] | 0.28 | - |
| Pipe process parameter (thickness tolerance min-max) [mm] | 0.11 | - |

Table 1 Cont.

| | Ex. 3 | Comp. 1 | Comp. 2 |
|---|---|---|---|
| Operative conditions first reactor | | | |
| $H_2/C_2H_4$ Molar ratio | 2.5 | - | - |
| $C_2H_4\%$ | 11 | - | - |
| Split (wt%) | 49 | - | - |
| MIE A) | 84 | - | - |
| Operative conditions second reactor | | | |
| $H_2/C_2H_4$ Molar ratio riser | 0.019 | - | - |
| $C_2H_4\%$ riser | 10.2 | - | - |
| $C_6H_{12}$ %riser | 0.67 | - | - |
| $H_2/C_2H_4$ Molar ratio downcomer | 0.031 | - | - |
| $C_2H_4\%$ downcomer | 5.2 | - | - |
| $C_6H_{12}$ % downcomer | 0.8 | - | - |
| $H_2/C_2H_4$ Molar ratio barrier | 0.004 | - | - |
| $C_2H_4\%$ barrier | 7 | - | - |
| $C_6H_{12}$ % barrier | 0.88 | - | - |
| Polymer properties | | | |
| Density (A) [$g/cm^3$] | 0.969 | - | - |
| MIP final resin [g/10 min] | 0.19 | 0.22 | 0.29 |
| MIF final resin [g/10 min] | 5.7 | 8.5 | 8.2 |
| Density final resin [$g/cm^3$] | 0.950 | 0.958 | 0.952 |
| MIF/MIP final resin | 29.8 | 38.7 | 28.5 |
| HMWcopo Index | 14.7 | 56.5 | 168 |
| LCBI at 1,000,000 g/mol | 0.85 | 0.86 | 0.82 |
| $Mw_{\_MALLS}/Mn_{GPC}$ | 16.4 | 14.7 | 18.1 |
| $Mw_{\_MALLS}$ [g/mol]] | 392844 | - | - |
| $Mz_{\_MALLS}$ [g/mol]] | 1581510 | - | - |
| FNCT 5 MPa/90°C (hours) | 725 | 178 | - |
| Charpy T = 0°C [$kJ/m^2$] | 15.7 | 7.9 | 5.9 |
| Sagging (sec) | 10:00 | 11:20 | - |
| Pipe process parameter [$kW/(rpm \cdot m \cdot min)$] | - | - | - |
| Pipe process parameter (thickness tolerance min-max) [mm] | - | - | - |

Notes : $C_2H_4$ = ethylene; $C_6H_{12}$ = hexene; ethylene and hexene amounts are in percent by moles; Split = weight amount of polymer produced in the concerned reactor.

**Claims**

1.  A polyethylene composition having the following features:

    1) density from 0.945 to 0.950 g/cm$^3$, determined according to ISO 1183 at 23°C;
    2) ratio MIF/MIP from 25 to 43, where MIF is the melt flow index at 190°C with a load of 21.60 kg, and MIP is the melt flow index at 190°C with a load of 5 kg, both determined according to ISO 1133;
    3) MIF from 3.5 to less than 8.5 g/10 min.;
    4) HMWcopo index from 1 to 40;
    5) long-chain branching index, LCBI, equal to or greater than 0.83;

    wherein the HMWcopo index is determined according to the following formula:

    $$HMWcopo = (\eta_{0.02} \times t_{maxDSC})/(10^{\wedge}5)$$

    where $\eta_{0.02}$ is the complex viscosity of the melt in Pa.s, measured at a temperature of 190°C, in a parallel-plate rheometer under dynamic oscillatory shear mode with an applied angular frequency of 0.02 rad/s; the $t_{maxDSC}$ is the time in minutes required to reach the maximum value of heat flow (in mW) of crystallization at a temperature of 124 °C under quiescent conditions, measured in isothermal mode in a differential scanning calorimetry apparatus, DSC; LCBI is the ratio of the measured mean-square radius of gyration $R_g$, measured by GPC-MALLS, to the mean-square radius of gyration for a linear PE having the same molecular weight at a mol. weight of 1,000,000 g/mol, said composition comprising:

    A) 30 — 70% by weight of an ethylene homopolymer or copolymer (the homopolymer being preferred) with density equal to or greater than 0.960 g/cm$^3$ and melt flow index MIE at 190°C with a load of 2.16 kg, according to ISO 1133, of 50 to 85 g/10 min.;
    B) 30 — 70% by weight of an ethylene copolymer having a MIE value lower than the MIE value of A).

2.  The polyethylene composition of claim 1, consisting of or comprising one or more ethylene copolymers.

3.  The polyethylene composition of claims 1 or 2, obtainable by using a Ziegler-Natta polymerization catalyst.

4.  The polyethylene composition of claim 3, wherein the Ziegler-Natta polymerization catalyst comprises the product of reaction of:

    a) a solid catalyst component comprising a Ti compound supported on MgCl$_2$, said component being obtained by contacting the titanium compound with the MgCl$_2$, or a precursor Mg compound, optionally in the presence of an inert medium, thus obtaining an intermediate product a'), then subjecting a') to prepolymerization and contact with an electron donor compound;
    b) an organo-Al compound; and optionally
    c) an external electron donor compound.

5.  The polyethylene composition of claim 1, having at least one of the following additional features:

    - MIP: 0.1 — 0.3 g/10 min.;
    - z-average molecular weight Mz equal to or greater than 1,500,000 g/mol, in particular from 1,600,000 to 3,000,000 g/mol, measured by GPC-MALLS;
    - $M_{w\_MALLS}/M_{n\_GPC}$ values from 12 to 24;
    - Comonomer content equal to or less than 2.6% by weight, in particular from 1 to 2.4% by weight, with respect to the total weight of the composition.

6.  Manufactured articles comprising the polyethylene composition of claim 1.

7.  Manufactured articles according to claim 6, in form of mono- or multilayer pipes, wherein at least one layer comprises the polyethylene composition of claim 1.

8.  Process for preparing the polyethylene composition of claim 1, wherein all the polymerization steps are carried out in the presence of a Ziegler-Natta polymerization catalyst supported on $MgCl_2$.

9. The process of claim 8, comprising the following steps, in any mutual order:

a) polymerizing ethylene, optionally together with one or more comonomers, in a gas-phase reactor in the presence of hydrogen;
b) copolymerizing ethylene with one or more comonomers in another gas-phase reactor in the presence of an amount of hydrogen less than step a);

where in at least one of said gas-phase reactors the growing polymer particles flow upward through a first polymerization zone under fast fluidization or transport conditions, leave said riser and enter a second polymerization zone through which they flow downward under the action of gravity, leave said second polymerization zone and are reintroduced into the first polymerization zone, thus establishing a circulation of polymer between said two polymerization zones

**Patentansprüche**

1. Polyethylenzusammensetzung mit den folgenden Merkmalen:

1) einer Dichte von 0,945 bis 0,950 g/cm$^3$, bestimmt gemäß ISO 1183 bei 23 °C;
2) einem Verhältnis von MIF/MIP von 25 bis 43, wobei MIF der Schmelzflussindex bei 190 °C unter einer Last von 21,60 kg ist, und MIP der Schmelzflussindex bei 190 °C unter einer Last von 5 kg ist, wobei beide gemäß ISO 1133 bestimmt werden;
3) einem MIF von 3,5 bis weniger als 8,5 g/10 min;
4) einem HMWcopo-Index von 1 bis 40;
5) einem langkettigen Verzweigungsindex, LCBI, gleich oder größer als 0,83;

wobei der HMWcopo-Index gemäß der folgenden Formel bestimmt wird:

$$HMWcopo = (\eta_{0,02} \times t_{maxDSC})/(10^{\wedge}5)$$

wobei $\eta_{0,02}$ die komplexe Viskosität der Schmelze in Pa s, gemessen bei einer Temperatur von 190 °C, in einem Parallelplattenrheometer unter einem dynamisch oszillierenden Schermodus mit einer angelegten Kreisfrequenz von 0,02 rad/s ist; die $t_{maxDSC}$ die Zeit in Minuten ist, die erforderlich ist, um den Maximalwert des Wärmeflusses (in mW) der Kristallisation bei einer Temperatur von 124 °C unter Ruhebedingungen zu erreichen, gemessen im isothermen Modus in einer Differentialscanningkalorimetrieapparatur, DSC; LCBI das Verhältnis des gemessenen mittleren quadratischen Trägheitsradius $R_g$, gemessen durch GPC-MALLS, zu dem mittleren quadratischen Trägheitsradius für ein lineares PE mit demselben Molekulargewicht bei einem Molekulargewicht von 1.000.000 g/mol ist, wobei die Zusammensetzung umfasst:

A) 30 bis 70 Gew.% eines Ethylenhomopolymers oder -copolymers (wobei das Homopolymer bevorzugt ist) mit einer Dichte gleich oder größer als 0,960 g/cm$^3$ und einem Schmelzflussindex MIE bei 190 °C unter einer Last von 2,16 kg gemäß ISO 1133 von 50 bis 85 g/10 min;
B) 30 bis 70 Gew.% eines Ethylencopolymers mit einem MIE-Wert unter dem MIE-Wert von A).

2. Polyethylenzusammensetzung nach Anspruch 1, die aus einem oder mehreren Ethylencopolymeren besteht oder diese umfasst.

3. Polyethylenzusammensetzung nach den Ansprüchen 1 oder 2, die unter Verwendung eines Ziegler-Natta-Polymerisationskatalysators erhältlich ist.

4. Polyethylenzusammensetzung nach Anspruch 3, wobei der Ziegler-Natta-Polymerisationskatalysator das Reaktionsprodukt von

a) einer festen Katalysatorkomponente, die eine auf $MgCl_2$ geträgerte Ti-Verbindung umfasst, wobei die Komponente erhalten wird, indem die Titanverbindung mit dem $MgCl_2$ oder einer Vorläuferverbindung von Mg kontaktiert wird, gegebenenfalls in Gegenwart eines inerten Mediums, wodurch ein Intermediärprodukt a') erhalten wird, dann a') Präpolymerisation und Kontakt mit einer Elektronendonorverbindung ausgesetzt wird;
b) einer Organoverbindung von Al; und gegebenenfalls
c) einer externen Elektronendonorverbindung umfasst.

5. Polyethylenzusammensetzung nach Anspruch 1 mit mindestens einem der folgenden zusätzlichen Merkmale:

— einem MIP von 0,1 bis 0,3 g/10 min.;
— einem z durchschnittlichen Molekulargewicht Mz gleich oder größer als 1.500.000 g/mol, insbesondere 1.600.000 bis 3.000.000 g/mol, gemessen mittels GPC-MALLS;
— Werten von $M_{w\_MALLS}/M_{n\_GPC}$ von 12 bis 24;
— einem Comonomergehalt gleich oder kleiner als 2,6 Gew.%, insbesondere 1 bis 2,4 Gew.% in Bezug auf das Gesamtgewicht der Zusammensetzung.

6. Gefertigte Artikel, umfassend die Polyethylenzusammensetzung nach Anspruch 1.

7. Gefertigte Artikel nach Anspruch 6 in Form von ein- oder mehrschichtigen Rohrleitungen, wobei mindestens eine Schicht die Polyethylenzusammensetzung gemäß Anspruch 1 umfasst.

8. Verfahren zur Herstellung der Polyethylenzusammensetzung nach Anspruch 1, wobei alle der Polymerisationsschritte in Gegenwart eines Ziegler-Natta-Polymerisationskatalysators durchgeführt werden, der auf $MgCl_2$ geträgert ist.

9. Verfahren nach Anspruch 8, umfassend die folgenden Schritte in beliebiger Reihenfolge:

a) Polymerisieren von Ethylen, gegebenenfalls zusammen mit einem oder mehreren Comonomeren, in einem Gasphasenreaktor in Gegenwart von Wasserstoff;
b) Copolymerisieren von Ethylen mit einem oder mehreren Comonomeren in einem anderen Gasphasenreaktor in Gegenwart einer Menge an Wasserstoff, die kleiner als in Schritt a) ist;

wobei in mindestens einem der Gasphasenreaktoren die wachsenden Polymerpartikel durch eine erste Polymerisationszone unter schnellen Verwirbelungs- oder Transportbedingungen aufwärts fließen, das Steigrohr verlassen und in eine zweite Polymerisationszone eintreten, durch die sie unter Einwirkung der Schwerkraft abwärts fließen, die zweite Polymerisationszone verlassen und wieder in die erste Polymerisationszone eingebracht werden, wodurch ein Polymerkreislauf zwischen den beiden Polymerisationszonen etabliert wird.

## Revendications

1. Composition de polyéthylène présentant les caractéristiques suivantes :

1) densité de 0,945 à 0,950 g/cm³, déterminée selon la norme ISO 1183 à 23°C ;
2) rapport MIF/MIP de 25 à 43, MIF étant l'indice de fluidité à chaud à 190°C sous une charge de 21,60 kg et MIP étant l'indice de fluidité à chaud à 190°C sous une charge de 5 kg, tous deux déterminés selon la norme ISO 1133 ;
3) MIF de 3,5 à moins de 8,5 g/10 min. ;
4) indice HMWcopo de 1 à 40 ;
5) indice de ramification à longue chaîne, LCBI, égal ou supérieur à 0,83 ;

l'indice HMWcopo étant déterminé selon la formule suivante :

$$HMWcopo = (\eta_{0,02} \times t_{maxDSC})/(10\text{^}5)$$

où $\eta_{0,02}$ est la viscosité complexe de la masse fondue en Pa.s, mesurée à une température de 190°C, dans un rhéomètre à plaques parallèles dans un mode de cisaillement oscillatoire dynamique à une fréquence angulaire appliquée de 0,02 rad/s ; $t_{maxDSC}$ est le temps en minutes requis pour atteindre la valeur maximale du flux de chaleur (en mW) de cristallisation à une température de 124°C dans des conditions de repos, mesurée en mode isotherme dans un appareil de calorimétrie différentielle à balayage, DSC ; LCBI est le rapport du rayon de giration moyen quadratique mesuré $R_g$, mesuré par GPC-MALLS (chromatographie par perméation de gel-diffusion de lumière à angles multiples), au rayon de giration moyen quadratique pour un PE linéaire présentant le même poids moléculaire à un poids moléculaire de 1.000.000 g/mole, ladite composition comprenant :

A) 30 à 70% en poids d'un homopolymère ou copolymère d'éthylène (l'homopolymère étant préféré) présentant une densité égale ou supérieure à 0,960 g/cm$^3$ et un indice de fluidité à chaud MIE à 190°C sous une charge de 2,16 kg, selon la norme ISO 1133, de 50 à 85 g/10 min. ;
B) 30 à 70% en poids d'un copolymère d'éthylène présentant une valeur MIE inférieure à la valeur MIE de A).

2. Composition de polyéthylène selon la revendication 1, constituée par ou comprenant un ou plusieurs copolymères d'éthylène.

3. Composition de polyéthylène selon les revendications 1 ou 2, pouvant être obtenue à l'aide d'un catalyseur de polymérisation de Ziegler-Natta.

4. Composition de polyéthylène selon la revendication 3, le catalyseur de polymérisation de Ziegler-Natta comprenant le produit de réaction de :

a) un constituant catalytique solide comprenant un composé à base de Ti supporté sur $MgCl_2$, ledit constituant étant obtenu par mise en contact du composé à base de titane avec le $MgCl_2$ ou un composé précurseur à base de Mg, éventuellement en présence d'un milieu inerte, ce qui permet d'obtenir un produit intermédiaire a'), puis par soumission de a') à une prépolymérisation et à un contact avec un composé donneur d'électrons ;
b) un composé organo-Al ; et éventuellement
c) un composé donneur d'électrons externe.

5. Composition de polyéthylène selon la revendication 1, présentant au moins l'une des caractéristiques supplémentaires suivantes :

- MIP : 0,1 — 0,3 g/10 min. ;
- poids moléculaire moyen en z Mz égal ou supérieur à 1.500.000 g/mole, en particulier de 1.600.000 à 3.000.000 g/mole, mesuré par GPC-MALLS ;
- valeurs $M_{w\_MALLS}/M_{n\_GPC}$ de 12 à 24 ;
- teneur en comonomère égale ou inférieure à 2,6 % en poids, en particulier de 1 à 2,4 % en poids, par rapport au poids total de la composition.

6. Articles fabriqués comprenant la composition de polyéthylène selon la revendication 1.

7. Articles fabriqués selon la revendication 6, sous la forme de tuyaux monocouches ou multicouches, au moins une couche comprenant la composition de polyéthylène selon la revendication 1.

8. Procédé de préparation de la composition de polyéthylène selon la revendication 1, toutes les étapes de polymérisation étant réalisées en présence d'un catalyseur de polymérisation de Ziegler-Natta supporté sur $MgCl_2$.

9. Procédé selon la revendication 8, comprenant les étapes suivantes, dans n'importe quel ordre mutuel :

a) polymérisation d'éthylène, éventuellement avec un ou plusieurs comonomères, dans un réacteur à phase gazeuse en présence d'hydrogène ;
b) copolymérisation d'éthylène avec un ou plusieurs comonomères dans un autre réacteur à phase gazeuse en présence d'une quantité d'hydrogène inférieure à celle de l' étape a) ;

où, dans au moins un desdits réacteurs à phase gazeuse, les particules polymères en croissance s'écoulent vers le haut à travers une première zone de polymérisation dans des conditions de fluidisation ou de transport rapides, quittent ladite colonne ascendante et pénètrent dans une deuxième zone de polymérisation à travers laquelle elles s'écoulent vers le bas sous l'action de la gravité, quittent ladite deuxième zone de polymérisation et sont réintroduites dans la première zone de polymérisation, établissant ainsi une circulation de polymère entre lesdites deux zones de polymérisation

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2256160 A
- US 4298718 A
- US 4495338 A
- US 4469648 A
- US 4399054 A
- WO 9844009 A
- US 5100849 A
- US 4829034 A
- EP 395083 A
- WO 2005019280 A

### Non-patent literature cited in the description

- D. Geldart, Gas Fluidisation Technology. J. Wiley & Sons Ltd, 1986, 155
- **BENOIT H. ; REMPP P ; GRUBISIC Z.** J. Polymer Sci., Phys. 1967, vol. 5, 753
- The dimensions of chain molecules containing branches and rings. **ZIMM BH ; STOCKMAYER WH.** J Chem Phys. 1949, vol. 17
- **RUBINSTEIN M. ; COLBY RH.** *Polymer Physics,* 2003
- **M. FLEISSNER.** *Kunststoffe,* 1987, vol. 77, 45